# EUROPÄISCHE PATENTSCHRIFT

(11) **EP 1 428 861 B1**
(45) Veröffentlichungstag und Bekanntmachung des Hinweises auf die Patenterteilung: **22.03.2006**
(21) Anmeldenummer: 03026403.0
(22) Anmeldetag: 19.11.2003
(51) Int. Cl.: C09J 7/02, B65H 19/10

(54) **Klebeband zum Aneinanderfügen des Anfanges einer neuen Papierrolle an das Ende einer zur Neige gehenden alten Papierrolle**
Adhesive tape for flying reel changes
Ruban adhésif pour raccordement volant

(30) Priorität: 13.12.2002 DE 10258667
(43) Veröffentlichungstag der Anmeldung: 16.06.2004
(73) Patentinhaber: tesa AG, 20253 Hamburg (DE)
(72) Erfinder: Nagel, Christoph, 22417 Hamburg (DE); Gebbeken, Bernhard, Dr., 21075 Hamburg (DE); Kehler, Harald, Dr., 21109 Hamburg (DE); Kleinhof, Klaus, 31552 Rodenberg (DE)

(56) Entgegenhaltungen:
- WO-A-93/12025
- DE-A- 10 112 636
- US-A- 5 996 927

## Beschreibung

Die Erfindung bezieht sich auf ein Klebeband zum Aneinanderfügen des Anfanges einer neuen Papierrolle an das Ende einer zur Neige gehenden alten Papierrolle.

In der Papierherstellung, der Papierveredlung - z. B. durch besondere Beschichtungen oder durch Kalandrierung zur Erhöhung von Glattheit, Glanz und spezifischem Gewicht samt Reißfestigkeit - und auch in der Papierverarbeitung liefern viele Verfahren nur dann die nötige konstante Qualität, wenn die Verfahren kontinuierlich ausgeführt werden. Eine Beschichtungsdicke hängt zum Beispiel nicht nur vom Abstand zwischen der zu beschichtenden Bahn und dem die Schicht glatt ziehenden Rakel ab, sondern auch von der Vorschubgeschwindigkeit. Darüberhinaus spielt auch die Temperatur des zu beschichtenden Gutes und der Beschichtungsmasse eine Rolle; beide können nur konstant sein, wenn die Bahngeschwindigkeit konstant ist.

Neben solchen technischen Erfordernissen spricht zudem die Einsparung von Rüstzeiten und die dadurch gewonnene hohe Effizienz für eine möglichst kontinuierliche Verfahrenstechnik.

Die durch ein eventuelles Wiederhochfahren als Ausschuss verloren gegangene Papierlauflänge infolge der Diskontinuität während des Beschleunigens und auch noch kurz danach wegen des erforderlichen Abklingens der unvermeidlichen Einschwingvorgänge, wächst etwa quadratisch über der zu erreichenden Geschwindigkeit.

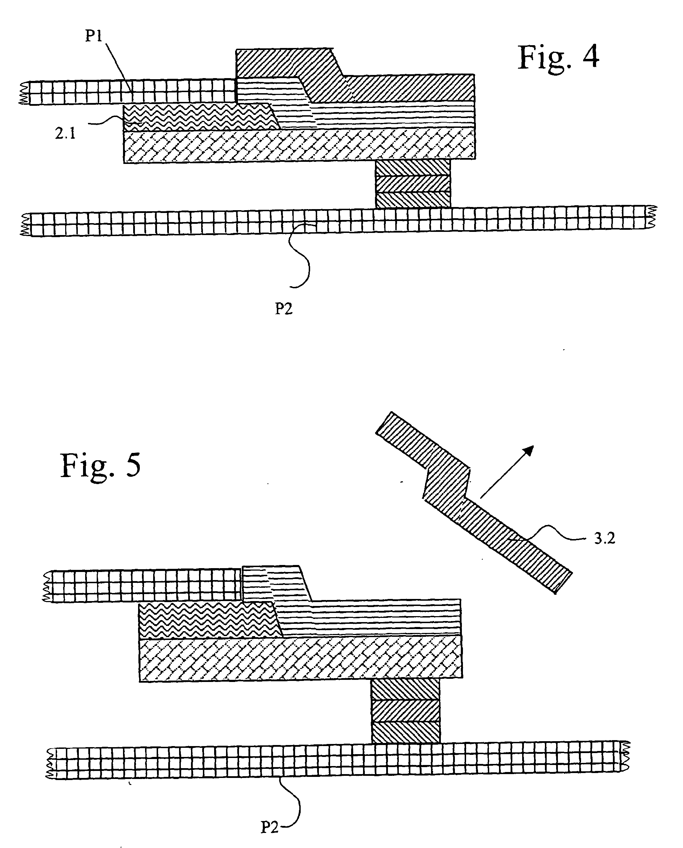

Die Wichtigkeit der Unterbrechungsfreiheit hat in den letzten 30 Jahren dadurch an Bedeutung gewonnen, dass die Durchlaufgeschwindigkeiten der Maschinen drastisch gesteigert worden sind: Innerhalb der Branche der Druckereien wurden und werden die höchsten Durchlaufgeschwindigkeiten im Zeitungsdruck gefahren und erreichen dort seit den 80er-Jahren, als besonders hochgeschwindigkeitstaugliche Tinten verfügbar wurden, zwischen 30 km/h und 60 km/h, während die dort üblichen Geschwindigkeiten 1961 noch zwischen 1,39 m/sec (= 5 km/h) und 4,16 m/sec (= 15 km/h) lagen, siehe dazu zum Beispiel Fig. 4 auf Seite 75 aus dem Bericht von W. H. Banks "Problems in High Speed Printing" über die 1961 in Elsinore, Dänemark, abgehaltene 6. Internationale Konferenz der Druckerei Forschungsinstitute. Der selbe Geschwindigkeitsbereich ist auf Seite 80, Zeilen 1 und 2, angegeben und auf ihn wird Bezug genommen in den Tabellen 2 bis 8 der darauf folgenden Seiten bis Seite 86. Dieser Bericht ist erschienen im Verlag PERGAMON PRESS.

In der Papierherstellung - wo keine Rücksicht auf eine Tintenübertragungsgeschwindigkeit genommen zu werden braucht - werden seit 10 Jahren sogar Durchlaufgeschwindigkeiten bis zu 120 km/h erreicht und diese Hochgeschwindigkeitsmaschinen haben sich immer weiter durchgesetzt und herrschen heute vor.

Nun lässt sich aber Papier nicht als beliebig langes Kontinuum anliefern oder abliefern; vielmehr geschieht dies als gewickeltes Gebinde mit einer zwar großen aber eben doch endlichen Wickellänge. Im Querschnitt zeigt ein solches Wickel also die Form einer archimedischen Spirale; weil aber die Papierdicke im Verhältnis zum Wickeldurchmesser sehr gering ist, liefert ein solches Papierwickel die Anmutung einer Rolle; dementsprechend werden in der Umgangssprache der Fachleute diese Papierwickel auch als "Papierrollen" bezeichnet.

Aus der Endlichkeit der Wickellänge ergibt sich das Problem, dass der Anfang der neuen Rolle an ein Ende der alten Rolle angefügt werden muss, um die Herstellung bzw. Veredlung bzw. Verarbeitung des Papieres fortzusetzen. Um die geforderte Kontinuierlichkeit zu verwirklichen, muss diese Fügung bei mit unverminderter Geschwindigkeit durchlaufendem Papier erfolgen. Einen Rollenwechsel unter diesen Umständen nennt der Fachmann "fliegend".

Es sind bereits verschiedene Klebebänder zur Durchführung eines Rollenwechsels bekannt geworden. So lehrt **US-PS 2,920,835**, veröffentlicht 1960 und seitdem dem Fachmann quasi als Urmutter aller modernen Papierspleißklebebänder bekannt, ein im wesentlichen aus zwei Teilen zusammengesetztes Klebeband, wobei ein Teil 4, das als "underlying paper piece" beschrieben wird, die eigentliche Spleißfunktion übernehmen soll, also die Verbindung zwischen dem Ende der alten Bahn und dem Anfang der neuen Bahn, und ein Teil 1 oder 5 die Funktion übernehmen soll, die oberste Wicklung der neuen Rolle, die vor Durchführung des flying splices zwecks Synchronisation mit der alten Bahn hochbeschleunigt werden muss, an deren zweitoberster Wicklung zu befestigen. Letztgenannte Funktion lässt sich treffend als "Rollenverschluss" bezeichnen. Diese Schrift befasst sich ausgiebig mit dem Problem, wie der Rollenverschluss die nötige Lösbarkeit bekommt, die gebraucht wird, sobald der Splice durch Andrücken der vorbereiteten neuen Rolle an die alte Bahn zustande gekommen ist. Zur Optimierung der erstgenannten Funktion lehrt Figur 3 dieser Schrift bei Verwendung eines permanent adhäsiven Klebers - sie wurden damals so genannt zur Abgrenzung von den erst durch Befeuchtung adhäsiven Klebern; heute nennt man sie "pressure sensitive adhesives" - die Verwendung eines durch einen Schlitz 10 zweigeteilten Abdeckbandes (heute auch "Liner" genannt) um zunächst nur eine erste Klebezone zum Unterkleben unter den Anfang der neuen Rolle frei zu legen und erst danach eine zweite Klebezone zum Unterkleben unter das Ende der neuen Bahn.

Diese Schrift lehrt auch bereits, dass die Klebefläche, die bis zur Durchführung des Splices als Rollenverschluss diente, nach ihrem Aufreißen in nichtklebendem Zustande hinterlassen wird infolge auf dem Klebstoff verbleibender herausgerissener Papierfasern (siehe Spalte 2, Zeilen 27 und 28).

Auf das letztgenannte Problem geht das 1961 veröffentlichte **US-PS 3,006,568** noch näher ein und lehrt von Spalte 2, Zeile 63 bis Spalte 3, Zeile 11 weitere Möglichkeiten, um das als wichtig herausgestellte nichtklebrige Hinterlassen des Klebers des ausgedienten Rollenverschlusses zu gewährleisten. Wie das vorgehende Patent auch, so begnügt sich auch dieses mit einem die axiale Breite der Rollenbahn nur partiell verklebenden Band, einem sogenannten "tab" oder "tag" oder "Etikett". Dis gilt sowohl für die Füge- als auch für die Verschlussfunktion. Die nicht verklebten Bereiche sind in spitzwinkelig zur Umfangsrichtung beschnitten, was deren Flattern oder Abreißen vermeidet.

Während der für einen fliegenden Rollenwechsel vor Durchführung der Fügung nötigen Drehbeschleunigung der neuen Rolle zur Angleichung der Bahngeschwindigkeit an der Peripherie der neuen Rolle an die Geschwindigkeit der zur Neige gehenden Papierbahn, wirken innerhalb des Wickels Fliehkräfte und an der Peripherie aerodynamische Kräfte.
Die Kräfte beider Kategorien wachsen quadratisch über zunehmender Geschwindigkeit. Darum muss die Stärke des Rollenverschlusses erheblich zunehmen, wenn der Spleiß bei höherer Geschwindigkeit ausgeführt werden soll. Die Stärke sowohl des Rollenverschlusses als auch der Bahnfügung wurde in den letzten Jahrzehnten im Gleichschritt zur Geschwindigkeitsentwicklung durch Vergrößerung der Klebefläche gesteigert. Dazu wurde zunächst die Anzahl der tabs (und damit auch der "V"s im Papierzuschnitt an den Enden) gesteigert und schließlich über die gesamte Axialerstreckung der neuen Rolle geklebt.

Beide zuvor genannten US-Schriften sehen eine solche Spleißausführung vor, dass sich der Anfang der neuen und das Ende der alten Bahn beide auf ein und derselben Seite des tabs befinden. (Der lösbare Rollenverschluss ist auf der Unterseite angeordnet.) Dies führt zu einer Hintereinanderanordnung beider Fügestellen der Papierbahnenden mit der Auswirkung eines zwar längeren Bereiches erhöhter Biegesteifigkeit in der zusammengefügten Bahn gegenüber einem Spleiß mit einer Übereinanderanordnung beider Fügestellen aber mit einer bei weitem nicht so krass erhöhten Biegesteifigkeit in diesem Spleißbereich weil nur zwei und nicht drei übereinander liegende Schichten miteinander verklebt sind, auch in dem Bereich, in dem drei Schichten - nämlich noch die Fahne der alten Bahn - übereinander liegen. Ein solcher Spleiß heißt "gleichseitig".

Einen gleichseitigen Splice lehrt auch die am 19. Januar 1989 in Finnland angemeldete und am 28. September 1990 veröffentlichte **FI-89 0287** (Anmeldungs-Nr.: 81997). Sie stellt die Schlitzung des Liners der beiden hintereinander liegenden Splice-Klebeflächen in ihren Mittelpunkt, nennt dabei aber nicht den Verwendungszweck für einen fliegenden Rollenwechsel und erwähnt wohl deshalb keinen Rollenverschluss; hieraus wie auch daraus, dass die für einen fliegenden Spleiß typische verbleibende kleine "Fahne" (engl.: "tail") vollständig abgeschnitten werden soll, was zu einem "butt splice" führt, folgert der Fachmann, dass dieser Spleiß statisch, das heißt im Stillstand, und nicht fliegend bei ununterbrochenem Papierlauf ausgeführt werden soll. Zur gleichen Patentfamilie gehört **WO 90/08032,** veröffentlicht am 26. Juli 1990.

Die am 13. Juni 1991 veröffentlichte **WO 91/08159** hingegen behandelt wieder das Problem der Lösbarkeit des Rollenverschlusses und die Notwendigkeit des nicht mehr klebrigen Hinterlassens des den Rollenverschluss bewirkenden Klebers nach dem Aufreißen des Verschlusses und schlägt dafür genauso ein spaltbares Papier vor, wie dies US-PS 2,920,835 und 3,006,568 bereits taten.

Ebenfalls auf das Problem des lösbaren Rollenverschlusses geht die am 21. Januar 1994 angemeldete und am 21. März 1995 veröffentlichte **CA 2,113,932** ein, die ein Klebeband zeigt mit einem spaltbaren Papierträger 12, je einer druckempfindlichen Klebstoffschicht 14 und 16 darauf und darunter die wiederum jeweils durch ein Abdeckband 18 bzw. 20 bis zu ihrem Einsatz hin geschützt sind.

**DE 195 44 010 C2**, angemeldet am 27. November 1995 und veröffentlicht am 28. Mai 1997 offenbart dies auch, ohne sich aber auf den Rollenverschluss zu beschränken. Obwohl dieses Klebeband ein beidseitig klebendes Klebeband ist, so ist doch nur eine Seite, nämlich die Oberseite, dazu bestimmt, das Ende der zur Neige gehenden alten Rolle mit dem Anfang der neuen Rolle zu verbinden in einer Hintereinander-Anordnung. Es geht also auch hier um einen einseitigen Splice.

Die untere klebende Seite des beidseitig klebenden Klebebandes ist hier dazu gedacht, zu Beginn der Fügeoperation etwa an der Stelle, wo die oberste Wicklung der neuen Rolle endet, auf die zweitoberste Wicklung geklebt zu werden. Danach soll die oberste Wicklung so darüber auf der Oberseite des Klebebandes angeheftet werden, dass sie einen Teil, beispielsweise ein Drittel, der oberen Klebstoffschicht einnimmt. Die durch die untere Klebstoffschicht zusammen gehaltene neue Rolle wird sodann auf die richtige Bahngeschwindigkeit beschleunigt, also synchronisiert, und dann mit dem noch freien Teil der oberen Klebstoffschicht an das Ende der alten Rolle angeheftet.

Im Moment des Anheftens muss der zuvor wesentliche Zusammenhalt der neuen Rolle aufgelöst werden, um ein Abspulen zu erlauben. Dies geschieht hier durch das Aufspalten des Papierträgers, eine Lösung, die bereits das zuvor erwähnte US-Patent 3,006,568 in Spalte 3, Zeile 9 ausdrücklich nannte und auch WO 91/08159. Wie schon in diesen älteren Schriften erläutert, stören die Überreste der unteren Klebstoffschicht dieses beidseitigen Klebebandes nicht den weiteren Verfahrensablauf in der Papierherstellung bzw. -veredlung bzw. -verarbeitung, weil auf ihr Papierreste anhaften.

Ein Nachteil dieser Lösung liegt aber darin, dass durch die Papierspaltung in nicht ganz kontrollierbarer Weise die Festigkeit des Papierträgers beeinträchtigt wird. In ungünstigen Fällen könnte es zu einer so weitgehenden Schwächung des Papierträgers kommen, dass die noch verbleibenden Reste des Papierträgers nicht mehr ausreichen, um die Grenze zwischen Papier der alten Rolle und Papier der neuen Rolle mit hinreichender Festigkeit und Beständigkeit zu überbrücken; es käme dann zu Reißern. Wegen des eingangs geschilderten Erfordernisses kontinuierlicher Fertigung, des hohen Ausschusses bei Verletzung dieser Forderung, und wegen der Stillstandszeit selber dieser äußerst kapitalintensiven Fertigungsanlagen kostet an einer großen Anlage bereits ein einziger Reißer etwa 15.000 €.

Darum erscheint die ältere **DE 40 33 900 A1,** die am 25. Oktober 1990 angemeldet wurde und am 10. Oktober 1991 veröffentlicht wurde, dem heutigen Fachmann als günstiger. Hier wird zur Herstellung einer brückenartigen Verbindung zwischen dem Ende einer alten und dem Anfang einer neuen Papierbahn ein Klebeband verwendet, das im Wesentlichen nur auf seiner Oberseite eine Klebeschicht aufweist. Die Deckfolie dieser Klebeschicht besteht aus zwei Teilen (4 und 5), die durch eine Längsnaht (9) voneinander getrennt sind. Auf der Unterseite des Trägers - vorzugsweise an einer Kante des Klebebandes - ist ein schmaler Klebestreifen (7 oder 70), ebenfalls mit einer Deckfolie (8), aufgebracht.

Die Haftkraft dieses Klebestreifens gegenüber Papier soll wesentlich höher sein als gegenüber dem Klebebandträger, an dem der Klebestreifen mit seiner anderen Seite anhaftet. Dieser schmale Klebestreifen dient der Befestigung dieses Klebebandes und damit der obersten Wicklung an der zweitobersten Wicklung der neuen Papierrolle, wobei das genannte Klebekraftverhältnis die Lösung dieser Verbindung bewirken soll in dem Moment, wo der Anfang dieser neuen Rolle vermittels des Klebebandes Verbindung zum Ende der alten Rolle bekommen hat und zwar eine Lösung in der Weise, dass der Klebestreifen (7 oder 70) auf der dort als Tambour bezeichneten Rolle verbleibt, sich also vom überbrückenden Klebeband ablöst. Der besagte Klebestreifen (7 oder 70) kann ausweislich Spalte 2, Zeilen 12 und 13 auch ein beidseitig klebendes Klebeband sein.

Diese Schrift erwähnt zwar nicht, dass der an der zweitobersten Wicklung verbliebene Rest des Klebesteifens (7 oder 70) nach seiner Ablösung vom überbrückenden Klebeband an seiner Ablöse-Oberfläche nicht mehr klebrig ist; weil aber die Notwendigkeit des nichtklebrigen Hinterlassens dem Fachmann längst selbstverständlich war, siehe die bereits genannten US-PS 2,920,835 und 3,006,568 und auch WO 91/08159 , ist dem Fachmann dieses selbstverständlich.

Für Verwendung in der papierherstellenden Industrie ist die Repulpierbarkeit des ganzen Klebebandes nötig, weshalb der Klebebandträger aus Papier bestehen muss. An einem papierenen Träger ist die einfachste Maßnahme zur Begünstigung der Ablösung auf der dem Klebestreifen (7/70) zugewandten Seite die Aufrauung des Papierträgers ebenda.

Aus der **DE 694 07 822 T2,** der deutschen Übersetzung zu **EP 0 757 657 B1,** nach dem PCT angemeldet am 27. Oktober 1994, veröffentlicht am 02. November 1995, ist ebenfalls ein Klebeband zur Verwendung für einen Spleiß beim fliegenden Rollenwechsel (kurz: "fliegender Spleiß" oder "flying splice") bekannt. Abgrenzend vom vorgenannten Stande der Technik betont diese Schrift (siehe zum Beispiel das letzte Merkmal des Anspruches 1), dass die äußere Oberfläche der zweitobersten Lage der neuen Rolle nach der Ablösung des Fliehkraftschutzes in einem nicht-klebenden Zustande belassen wird und knüpft damit an die ausführlicheren Darlegungen aus dem bereits genannten US-PS 3,006,568 und aus US-PS 2,920,835 an; auch wenn sie diese nicht würdigt.

Auch DE 694 07 822 gliedert - wie schon US-PS 2,920,835 und FI-89 0287 - die Klebeseite des Klebebandes, die auf der für den Spleiß vorzubereitenden neuen Rolle radial außen liegt - also die nach einer Beschränkung so genannte "erste Fläche" eines Trägerteiles eines Spleißabschnittes - in zwei hintereinander liegende Klebeschichten. Deren erste dient dazu, das vordere Ende der neuen Rolle am Trägerteil zu befestigen und die zweite dazu, das Trägerteil am weiteren Bahnmaterial der zur Neige gehenden Rolle zu befestigen. Die erste Klebeschicht soll sich über die Breite des Trägerteiles im Wesentlichen vom ersten Längsrand des Trägerteils bis zu einer zu dessen Mitte hin gelegenen "ersten Position" erstrecken, während die zweite Klebeschicht an oder hinter besagter erster Position beginnen soll ohne sich mit dieser zu überlappen, und sich über die Breite des Trägerteiles zu einer "zweiten Position" erstrecken soll, die zum zweiten Längsrand des Trägerteiles hin gelegen ist. In allen Ausführungsbeispielen sind beide Klebeschichten einstückig hergestellt aus der selben Klebmasse.

Die Figuren dieser Schrift zeigen, insbesondere die Figuren 6, dass die besagte "erste Position" mit der Stelle zusammenfällt, an der das Abdeckband geschlitzt und dadurch in zwei Hälften 10 und 11 zerteilt ist. Figur 11 dieser Schrift zeigt eine teurer herzustellende aber leichter zu handhabende Ausführungsform, dergemäß beide Abdeckbandhälften 10 und 11 nicht bündig aneinander sondern in der Mitte geschindelt übereinander liegen, um das überstehende, folienartige Abdeckbandende leichter ergreifen zu können.

Auch bei DE 694 07 822 verbleibt das Problem, dass die zweite Klebeschicht - vor allem an ihrem Anfang - heftiger auf Schlupf und Scherung belastet wird als die erste Klebeschicht. Dies liegt daran, dass die erste Klebeschicht bei stillstehender Rolle zur Haftung am Papier der neuen Rolle gebracht werden kann und zudem durch rechtzeitige Vorbereitung des Spleißes dem dortigen Kleber viele Sekunden, ja bis in den Minutenbereich hin Zeit gegeben werden kann, um die volle Beständigkeit zu erreichen, während die zweite Klebeschicht die erforderliche Beständigkeit im Millisekundenbereich aufbauen muss und zudem dadurch heftig belastet ist, dass die Synchronisation nie ganz 100%ig erreicht wird, sodass die kleine zum Kontakzeitpunkt noch verbliebene Bahngeschwindigkeits-Differenz sich in einem Ruck entlädt, währenddessen ein kleiner Schlupf und die maximale Scherbeanspruchung in der Klebfuge entsteht.

Zur Lösung dieses Problemes ist es dem Fachmann geläufig, so auch in den inzwischen am Markt weitgehend durchgesetzten Produkten der tesa® EasySplice® - Familie, die höher belastete zweite Klebeschicht breiter auszuführen als die erste, sodass - in der Papierlaufrichtung gesehen - die zweite Klebeschicht länger ist als die erste.

Auch die Produkte der tesa® EasySplice® - Familie haben einen Mechanismus zur Lösung des Rollenverschlusses, also der vorübergehenden Verbindung zwischen der obersten und der zweitobersten Wicklung der neuen Papierrolle und zwar einen durch Papierspaltung, wie schon in US-PS 2,920,835 und US-PS 3,006,568 gelehrt. Wie die **DE 196 32 689 A1** (und daraus **EP 0 831 046 B1**) ausführt, ist anstelle der Klebeschicht (7 / 70), von der die zuvor behandelte Entgegenhaltung spricht, hier ein beidseitig klebendes Klebeband eingesetzt mit einem solchen papierenen Träger etwa in seiner Mitte, der sich im Ablösezeitpunkt spaltet. In dieser Beziehung besteht Ähnlichkeit zur zuvor gewürdigten CA 2,113,932; allerdings spaltet gemäß DE 196 32 689 A1 nicht der Hauptpapierträger, sondern nur der im unteren Klebestreifen angeordnete zweite Papierträger, der keine Bedeutung für die Festigkeit und Beständigkeit der Überbrückung zwischen dem Anfang der neuen Rolle und dem Ende der alten Rolle hat.

Weitere Schutzrechte zur EasySplice®-Produktfamilie sind die **DE 196 28 317 A1,** die **DE 198 30 673 A1,** die **DE 198 30 674 A1** und die **DE 199 02 179 A1.**

Weitere Schutzrechte zu fliegenden Spleißen und von hierfür geeigneten Klebebändern sind die **US-PS 2,377,971 , DE-AS 12 67 930 , EP 0 566 880 B1 , EP 0 696 254 B1 , DE 38 34 334 A1 , WO93/12025** und die **DE 42 10 329 A1**. Als Verschluss von Verpackungen für Photorollfilme und dergleichen ist zudem **DE-AS 10 06 786** bekannt. Aus dem Recherchenbericht zu EP 0 831 046 B1 ist zudem **GB 2 294 235 A, WO 91 08159 A, WO 95 29115 A** und **EP 0 418 527 A** bekannt.

Die Erfinder haben sich die Aufgabe gestellt, ein weiteres Mittel oder eine weitere Maßnahme dafür zu schaffen, dass die "zweite Klebeschicht" in der Begriffsbildung der DE 694 07 822 T2 der hohen Belastung standhält.

Ausgehend von den gattungsbildenden Merkmalen, die in Anlehnung an DE 694 07 822 T2, dem unseres Erachtens nächstliegenden Stande der Technik, wie folgt formuliert sind,
Klebeband (K) zum Aneinanderfügen zweier Materialbahnen (I, II),
vorzugsweise zum Aneinanderfügen des Anfanges (A) einer neuen Papierrolle (P) an das Ende (E) einer zur Neige gehenden alten Papierrolle,
a) wobei das Klebeband (K) dazu geeignet ist, zumindest im Wesentlichen quer über die aneinander zu fügenden Materialbahnen (I, II) aufgeklebt zu werden,
b) wobei das Klebeband (K) einen - vorzugsweise aus Papier bestehenden - Träger (1) aufweist,
c) auf dessen (1) Oberseite eine erste Klebeschicht (2.1) und eine zweite Klebeschicht (2.2) angeordnet ist,
d) wobei die erste Klebeschicht (2.1) dazu vorgesehen ist, am Anfang (A) (= das vordere Ende) der neuen Materialbahn (I) anzuhaften,
e) während die zweite Klebeschicht (2.2) dazu vorgesehen ist, am Ende (E) der zur Neige gehenden alten Materialbahn (II) anzuhaften,
f) wobei sich die erste Klebeschicht (2.1) - in der Dimension der Breite des Klebebandes (K) - von einer ersten Position (a) in der Nähe einer ersten Begrenzungskante (4.1) des Trägers (1) bis zu einer zweiten Position (b) erstreckt, welche sich zwischen den beiden Begrenzungskanten (4.1, 4.2) des Klebebandes (K) oder an der zweiten Begrenzungskante (4.2) befindet,
g) und sich die zweite Klebeschicht (2.2) - in der Dimension der Breite des Klebebandes (K)- von einer dritten Position (c), welche sich zwischen den beiden Begrenzungskanten (4.1, 4.2) des Trägers (1) des Klebebandes (K) befindet bis zu einer vierten Position (d) in der Nähe der anderen Begrenzungskante (4.2) des Trägers (1) erstreckt,
   ist die erfindungsgemäße Lösung dadurch gekennzeichnet, dass
h) die zweite Position (b) weiter von der ersten Begrenzungskante (4.1) des Trägers (1) entfernt liegt als die dritte Position (c),
i) sodass die zweite Klebeschicht (2.2) die erste Klebeschicht (2.1) überlappt.

Durch das Übereinanderliegen zweier Klebeschichten wird im Bereich der erfindungsgemäßen Überlappung eine größere Klebstoffdicke erreicht. So wird zu Beginn des Kontaktes eine größere Pressung im Überlappungsbereich aufgebaut und dadurch der Schlupf bei Ausgleich der kleinen unvermeidlichen Synchronisationsmängel verkleinert. Die Belastbarkeit pro Klebefläche der danach in Kontakt tretenden Klebeflächenbereiche wird durch diese Schlupfminderung begünstigt, selbst wenn die Pressung pro Fläche in diesen später in Kontakt tretenden Klebeflächenbereichen durch die Pressungskonzentration auf den Anfang vermindert sein sollte. Dieser Vorteil kann in Form einer weiter gesteigerten Produktzuverlässigkeit verwertet werden und/oder in Form einer Verschmälerung des Klebebandes, wodurch die Laufgleichmäßigkeitsstörungen bei Durchlauf der Spleiß-Stelle durch Vorrichtungen wie Walzenpaare etc. noch weiter verringert werden.

Zur weiteren Optimierung der verschiedenen Klebebereiche auf die beiden verschiedenen Klebefälle werden die beiden Klebeflächen zweckmäßigerweise aus zwei verschiedenen Klebmassen hergestellt.

Dabei sollte die Rezeptur der Klebmasse der ersten Klebeschicht (2.1) - die dazu vorgesehen ist, den Anfang, also das vordere Ende, der neuen Rolle zu fixieren und so vor ungewolltem Abwickeln vor der Anfügung an das Ende der alten Bahn zu bewahren - also die Klebmasse, die quasi in Ruhe zu ihrer vollen Scherbeständigkeit bringbar ist und nachfolgend als erste Klebmasse bezeichnet wird, auf eine höhere Scherbeständigkeit hin formuliert sein als die zweite Klebmasse. Die höhere Beständigkeit ist bevorzugt doppelt so hoch, besonders bevorzugt vier mal so hoch.

Zur Messung der Scherbeständigkeit:
Die Klebmassen werden mit einer solchen Schichtdicke auf eine 25 *µ*m dicke Polyesterfolie beschichtet, dass 25 g Klebmasse pro m² gestrichen werden. Nach dem Trocknen und eventuellen Vernetzen der Klebmasse wird ein Streifen von 13 mm Breite und mindestens 20 mm Länge herausgeschnitten und auf ein definiertes Papier verklebt, vorzugsweise Tiefdruckpapier "Neopress T 54" von StoraEnso oder Streichrohpapier, z. B. Mediaprint 135 g/m². Die Verklebungsfläche ist rechtwinklig mit den Abmessungen 13 mm x 20 mm.
Um einen konstanten Andruck beim Verkleben zu gewährleisten, wird der Prüfling mit einer 2 kg schweren Rolle zweimal langsam überrollt. Das so hergestellte Prüfmuster wird mit einem Gewicht von 1 kp (=9,865 N) parallel zur Verklebungsebene belastet und die Zeit gemessen, die der Klebstreifen auf dem Papier verbleibt.
Zur besseren Differenzierung verschiedener Klebmassen kann der Test bei unterschiedlichen Prüftemperaturen durchgeführt werden; wo nichts zur Temperatur gesagt ist, ist Raumtemperatur gemeint, also etwa 21 °C.

Neben dem Genuss einer weiter erhöhten Beständigkeit und so noch weiter verringerten Ausfallhäufigkeit, ermöglicht es diese Klebstoff-Spezialisierung auch, die erste Klebeschicht des Splice-Klebebandes besonders schmal zu halten, also in der Laufrichtung des zu fügenden Papieres gesehen besonders kurz zu halten. Eine solche mögliche Klebzonenverkürzung bewirkt eine Verkleinerung der einhergehenden Gleichmäßigkeits-Störung im Papierlauf, wenn die Splice-Stelle durch Walzenpaare oder über Umlenkrollen oder andere Bearbeitungswerkzeuge läuft.

Bevorzugt ist die erste Klebmasse um mindestens 40% scherbeständiger als die zweite Klebmasse; am besten beträgt ihre Scherbeständigkeit mindestens das 3-fache.

Es empfiehlt sich dabei weiterhin, die Rezeptur der zweiten Klebmasse, also der Klebmasse der zweiten Klebeschicht (2.2) - die dazu vorgesehen ist, innerhalb einer sehr kurzen Kontaktzeit am Ende der zur Neige gehenden, mit voller Geschwindigkeit laufenden alten Materialbahn (vorzugsweise: Papierbahn) anzuhaften - auf eine höhere Klebrigkeit (tack) hin zu formulieren als die Rezeptur der ersten Klebmasse. Zur Ausnutzung dieses gewonnenen Freiheitsgrades empfiehlt es sich, den Tack dieser zweiten Klebmasse mindestens um den Faktor 3 größer einzustellen als den Tack der ersten Klebmasse, vorzugsweise um einen Faktor zwischen 8 und 12. Dabei kann in Kauf genommen werden, dass die Scherbeständigkeit der zweiten Klebmasse geringer ist als die der ersten; zumindest dann, wenn dies in Kauf genommen wird, sollte diese zweite Klebeschicht - in grundsätzlich an sich bekannter Weise - breiter sein als die erste Klebeschicht, um diesen Nachteil getreu der Lehre, dass eine Kette nur so stark ist wie ihr schwächstes Glied, zu kompensieren.

Während bislang eine Ungleichmäßigkeit in der Größe bekannt war, dass die erste Klebezone, die der Anbindung des Anfanges der neuen Rolle dient, etwa 40% der Klebebandbreite einnahm und die restlichen 60% auf die Anbindung an der zur Neige gehenden alten Bahn entfielen, wird diese Ungleichmäßigkeit bei Verwendung zweier verschieden spezialisierter Klebmassen vorzugsweise auf einen Wert zwischen 30% zu 70% und 20% zu 80% gesteigert. Dies liegt daran, dass in der Spezialisierung des Klebers der ersten Zone auf besonders hohe Scherbeständigkeit hin eine noch größere Qualitätsverbesserung und damit Verkleinerung der Klebezonenbreite möglich ist als in der Spezialisierung des Klebers der zweien Zone auf hohe Klebrigkeit hin.

Bei Verwendung zweier verschiedener Klebmassen empfiehlt es sich ferner, dass im Überlappungsbereich die stärker klebrige (tackigere) Klebeschicht über der schwächer klebrigen Klebeschicht liegt, also die zweite über der ersten. So kommt die klebrigere Klebeschicht dem zu verklebenden Gegenstück (hier Papier) zugewandt zu liegen und der Vorteil der hohen Anfangsverklebung wird maximiert. Dazu muss hingenommen werden, dass die tackigere Klebeschicht sich im Überlappungsbereich weiter vom Klebebandträger entfernt befindet, was aber insbesondere dann kaum stört, wenn die darunter befindliche erste Klebeschicht - wie empfohlen - besonders scherbeständig ist.

Gemäß einer weiteren Weiterbildung der Erfindung erstreckt sich die erste Klebeschicht über die gesamte Breite des Klebebandes. Auch hiermit wird ein Pressungsanstieg zu Beginn des Einlaufes der zweiten Klebeschicht in die Kontaktzone erreicht. Gegenüber einer solchen Variante, in der die erste Klebeschicht nicht vollflächig ausgeführt ist - in den Worten des Merkmales k) sich also bis zu einer zweiten Position (b) erstreckt, welche sich zwischen den beiden Begrenzungskanten des Klebebandes befindet - , lässt sich diese Variante leichter herstellen. So ist nämlich die Gefahr vermieden, sich an der Stelle, wo sich ansonsten die zweite Klebeschicht herunter auf den Träger begeben würde, Luftblasen einzufangen, von denen aus Ablösungen auftreten können.

Auch bei dieser vollflächigen Ausbildung der ersten Klebeschicht empfiehlt es sich, für beide Klebeschichten verschiedene Klebmassen zu benutzen. Auch hierbei sollte die tackigere (zweite) Klebeschicht oben, also weiter entfernt vom Träger, liegen, während die scherbeständigere (erste) Klebeschicht unten, also näher am Träger oder vorzugsweise direkt auf dem Träger liegt.

Gerade dann, wenn die erste und hochscherbeständige Klebeschicht vollflächig und direkt auf dem Träger liegt, entfaltet sie den zunächst unerwarteten Zusatz-Effekt, dass nämlich die Weiterreißbeständigkeit des Trägers scheinbar erhöht wird. Dies liegt nach bisheriger Erkenntnis an einer Art spaltüberbrückendem Effekt. Dieser Vorteil kann dazu genutzt werden, die ohnehin schon extrem geringe Reißerquote noch weiter zu senken, oder noch höhere Papierlaufgeschwindigkeiten zuzulassen oder die Trägerdicke noch weiter zu reduzieren, was die Gleichlaufstörung beim Spleißdurchlauf weiter reduzieren würde.

Die für die Ausführung mit nicht-vollflächiger erster Klebeschicht genannten bevorzugten Weiterbildungen gelten analog auch für die Ausführung mit vollflächig aufgebrachter erster Klebeschicht. Insbesondere ist es also auch hier sinnvoll, dass die zweite - weiterbildungsgemäß hochtackige - Klebeschicht sich über mehr als 60% der Klebebandbreite erstreckt.

Demgegenüber haben die Varianten, deren erste Klebeschicht nicht vollflächig ausgeführt ist, zum einen den Vorteil mit weniger Klebmasse auszukommen, also etwas billiger sein zu können, und zum anderen den Bereich höchster Biegesteifigkeit im Splice kleiner zu halten und dadurch den Gleichlauf des herzustellenden oder zu verarbeitenden Papieres gegenüber dem derzeitigen Stande der Technik zu verbessern.

Vorzugsweise wird mit der Erfindung eine schmalere Bemessung des Klebestreifens zur Verbindung der beiden Papierbahnen möglich, was dessen störenden Einfluss in der weiteren Verarbeitung des Papieres minimiert. So würde zum Beispiel die Unwucht in einer einen Splice enthaltenden Rolle verringert. Stattdessen oder zusätzlich kann die Optimierung der zweiten Klebeschicht aber auch dazu genutzt werden, dass sie mehr Schlupf zulässt und dadurch den beim Verbinden infolge des Synchronisationsfehlers entstehenden Ruck besonders sanft ausfallen lässt, was der Schlüssel zu einer weiteren Steigerung der zulassungsfähigen Papierlaufgeschwindigkeit sein könnte.

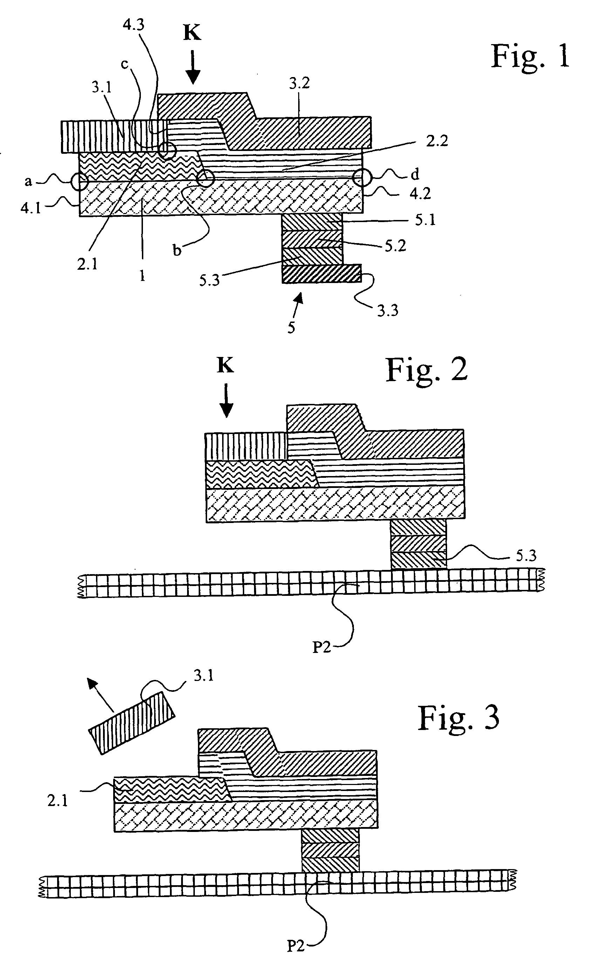

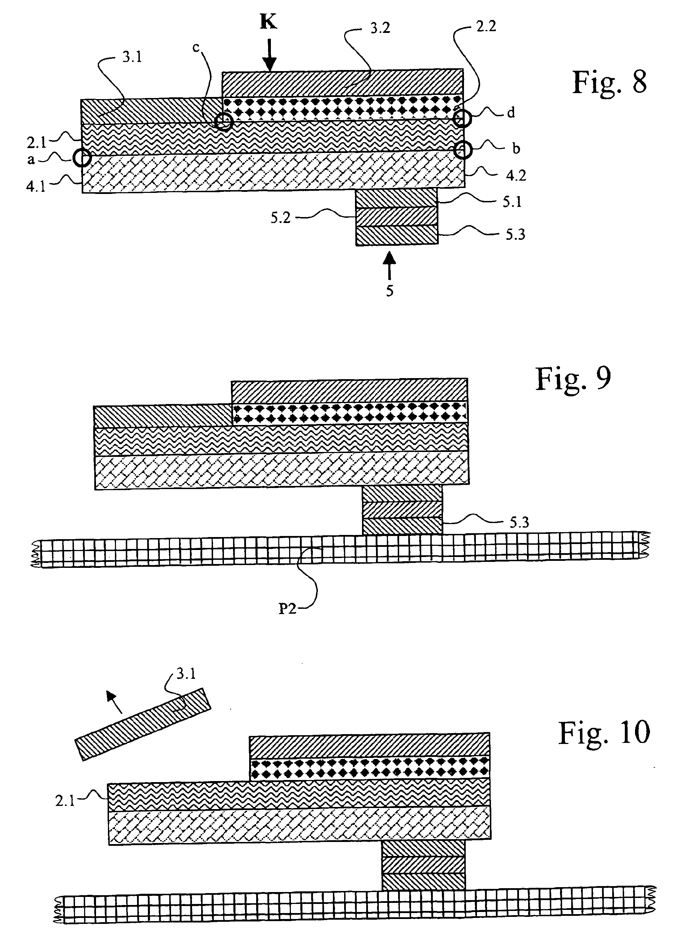

Die Erfindung wird nachfolgend anhand zweier Ausführungsbeispiele näher erläutert, deren erstes in den Figuren 1 bis 7 und deren zweites in den Figuren 8 bis 14 zweidimensional dargestellt ist; auf die Darstellung der dritten Dimension wurde zur Vereinfachung verzichtet, was hier zulässig ist, weil die dargestellten Schnittflächen über der gesamten Länge der dargestellten Klebebänder und über der Breite der zu fügenden Papierbahnen konstant ist. Überdies ist die bevorzugte Breite eines erfindungsgemäßen Splice-Klebebandes mit (je nach Anwendungsfall) 2,5 cm bis etwa 7 cm um Größenordnungen kleiner als der Durchmesser der neuen Papierrolle, der in der heute üblichen Praxis zwischen 80 cm und 3 m liegen kann, weshalb auf die Darstellung der Wölbung der entsprechenden Papierbahnausschnitte der neuen Rolle ebenfalls verzichtet wurde. Dies vorangestellt zeigt:
- Fig. 1: ein erfindungsgemäßes Splice-Klebeband, dessen erste Klebeschicht sich nicht über die gesamte Klebebandbreite erstreckt,
- Fig. 2: das gleiche Klebeband wie Figur 1, nun aber bereits aufgeklebt auf die zweitoberste Papierlage oder Wicklung der neuen Papierrolle,
- Fig. 3: das Gleiche wie Figur 2, wobei jedoch nun bereits das Abdeckband von der ersten Klebeschicht abgezogen ist,
- Fig. 4: das Gleiche wie Figur 3, wobei jedoch nun bereits die oberste Papierlage (= oberste oder letzte Wicklung) der neuen Papierrolle auf den durch das vorherige Abziehen des Abdeckbandes freigelegten Teilbereich der ersten Klebeschicht aufgeklebt ist, wonach die so vorbereitete neue Papierrolle verschlossen und dadurch fliehkraftbeständig ist,
- Fig. 5: das Gleiche wie Figur 4, jedoch nach Entfernung des Abdeckbandes von der zweiten Klebeschicht, wonach nun die Papierrolle tatsächlich beschleunigt wird,
- Fig. 6: zeigt den Moment, wo die gemäß Fig. 5 vorbereitete und auf die richtige Drehzahl beschleunigte neue Papierrolle an die alte Papierbahn herangeführt und angedrückt wird, wonach es zur Verklebung beider Papierbahnen kommt, und schließlich zeigt
- Fig. 7: das etwa eine halbe bis eine Millisekunde später erfolgende Aufreißen des Verschlusses der neuen Papierrolle P, sodass nun auch die folgenden Wickellagen abziehbar sind.

Sich auf das zweite, ganz besonders bevorzugte Ausführungsbeispiel beziehend zeigt in einer völlig analogen Abfolge:
- Fig. 8: ein erfindungsgemäßes Splice-Klebeband, dessen erste Klebeschicht sich über die gesamte Klebebandbreite erstreckt,
- Fig. 9: das gleiche Klebeband wie Figur 8, nun aber bereits aufgeklebt auf die zweitoberste Papierlage oder Wicklung der neuen Papierrolle,
- Fig. 10: das Gleiche wie Figur 9, wobei jedoch nun bereits das Abdeckband von der ersten Klebefläche abgezogen ist,
- Fig. 11: das Gleiche wie Figur 10, wobei jedoch nun bereits die oberste Papierlage (= oberste oder letzte Wicklung) der neuen Papierrolle auf den durch das vorherige Abziehen des Abdeckbandes freigelegten Teilbereich der ersten Klebefläche aufgeklebt ist, wonach die so vorbereitete neue Papierrolle verschlossen und dadurch fliehkraftbeständig ist,
- Fig. 12: das Gleiche wie Figur 11, jedoch nach Entfernung des Abdeckbandes von der zweiten Klebeschicht, wonach nun die Papierrolle mit ihrer klebebereiten Klebeschicht tatsächlich beschleunigt wird,
- Fig. 13: zeigt den Moment, wo die gemäß Fig. 12 vorbereitete und auf die richtige Drehzahl gebrachte neue Papierrolle an die alte Papierbahn herangeführt und angedrückt wird, wonach es zur Verklebung beider Papierbahnen kommt, und schließlich zeigt
- Fig. 14: das etwa eine halbe bis eine Millisekunde später erfolgende Aufreißen des Verschlusses der neuen Papierrolle P, sodass nun auch die folgenden Wickellagen abziehbar sind.

**Figur 1** zeigt ein erfindungsgemäßes Splice-Klebeband K, dessen erste Klebeschicht 2.1 sich nicht über die gesamte Klebebandbreite erstreckt; vielmehr erstreckt sie sich von einer ersten, mit "a" bezeichneten Position, die sich zumindest in der Nähe einer ersten Begrenzungskante 4.1 befinden soll und sich in diesem Ausführungsbeispiel genau bei der Begrenzungskante 4.1 befindet, bis zu einer Position b, die in der Figur weiter rechts liegt, dennoch aber näher bei der links gezeigten ersten Begrenzungskante 4.1 als der rechts gezeigten zweiten Begrenzungskante 4.2.

Die zweite Klebeschicht 2.2 dieses Klebebandes K erstreckt sich auf der gleichen Seite des Trägers 1, die im Rahmen dieser Anmeldung auch als Oberseite bezeichnet wird; und zwar erstreckt sie sich von einer Position c, die auch als "dritte Position" bezeichnet wird bis zu einer Position d, die auch als "vierte Position" bezeichnet wird. Dabei liegt die Besonderheit der Erfindung darin, dass die Position c näher an der ersten Begrenzungskante 4.1 liegt als die Position b. Mit anderen Worten: In der in den Figuren gewählten Seitenzuordnung liegt c weiter links als b. Die vierte Position d befindet sich in beiden Ausführungsbeispielen nicht nur in der Nähe der anderen (rechten) Begrenzungskante 4.2 des Trägers 1 sondern sogar exakt da.

Durch die Besonderheit, dass c links von b liegt, überlappen sich die Bereiche a-b und c-d wobei sich die beiden Klebeschichten 2.1 und 2.2 zwischen c und b überlappen. Wenn - wie bevorzugt - beide Klebeschichten aus verschiedenen Klebmassen bestehen, dann sollte die erste, hier links dargestellte Klebeschicht 2.1 eine höhere Scherbeständigkeit aufweisen als die zweite, rechts und überlappend liegende zweite Klebeschicht 2.2, während letztere (2.2) den höheren Tack haben sollte.

In an sich bekannter Weise sollen beide Klebeschichten 2.1, 2.2 durch je ein Abdeckband 3.1 bzw. 3.2 abgedeckt sein, wobei das Abdeckband 3.1 nach rechts natürlich nur so weit zu reichen braucht, wie die weiter nach rechts reichende Klebeschicht 2.1 nicht ohnehin schon durch die Klebeschicht 2.2 abgedeckt ist.

Die Herstellbarkeit des erfindungsgemäßen Klebebandes K wäre besonders einfach, wenn die linke Begrenzungskante des Liners (= Abdeckbandes) 3.1 genau auf der linken Begrenzungskante 4.1 angeordnet wäre und die rechte Begrenzungskante des Liners 3.2 genau auf der rechten Begrenzungskante 4.2. - Indessen lässt sich das erfindungsgemäße Klebeband K leichter benutzen, wenn die Abdeckbänder 3.1, 3.2 die abgedeckte Klebfläche zumindest einseitig etwas überragen, weil sie dann besser zum Einleiten einer Ablösung mit den Fingern ergriffen werden können. Letzteres ist in Figur 1 dargestellt, während in allen folgenden Figuren auf dieses Détail verzichtet wurde, zum einen, um auch diese kostengünstigere Lösung illustriert zu haben und zum zweiten, um den Blick auf das Erfindungswesentliche zu konzentrieren.

Als Material für den Träger 1 ist hier wie für das in den Figuren 8 bis 14 dargestellte Ausführungsbeispiel ein hochfestes aber wasserlösliches und somit repulpierbares Papier gewählt. Der Träger 1 kann vor dem Auftrag der Klebeschichten ein- und/oder beidseitig mit Haftungsvermittlern behandelt sein.

Auf der den beiden Klebeschichten gegenüber liegenden Seite des Trägers 1, die in dieser Anmeldung auch als Unterseite bezeichnet wird, befindet sich zweckmäßigerweise ein lösbarer Verschluss 5, der die Aufgabe hat, die - erst in Figur 2 in Erscheinung tretende - neue Papierrolle gegen ein vorzeitiges Abwickeln in der Beschleunigungsphase zu sichern. Für die hier vorliegende Erfindung ist jede beliebige Ausbildung von lösbaren Verschlüssen möglich; bevorzugt ist jedoch ein Verschluss wie aus der DE 196 28 317.5 an sich bekannt und hier auch dargestellt: Dieser Verschluss 5 weist zwischen seinen beiden Klebeschichten 5.1 und 5.3 eine Lage 5.2 aus Spaltpapier auf, welches sich im Moment der Verschlussöffnung etwa entlang seiner Mittelebene spaltet. Dabei ist unerheblich, ob das Spaltpapier die Eigenschaft der Spaltbarkeit dadurch erhält, dass es aus zwei Schichten zusammengesetzt wird, deren Kohäsion höher gewählt ist als die Adhäsion zur dazwischen angeordneten trennbaren Klebeschicht oder dadurch, dass das Papier in seinen Oberflächenbereichen höher verdichtet und somit fester ist als in seinen mittleren Bereichen oder durch noch andere Mittel.

Zur sicheren Erhaltung seiner Funktionsfähigkeit auch bei Lagerung und Transport weist auch die untere Klebeschicht 5.3 dieses lösbaren Verschlusses ein - und zwar mit 3.3 bezeichnetes - Abdeckband auf. Auch dieses kann bündig abschließen, ist aber vorzugsweise zumindest einseitig überragend ausgebildet, wie hier gezeigt. Es ist auch möglich - wie in den Figuren 8 bis 14 gezeigt - auf das Abdeckband 3.3 ganz zu verzichten, wenn das Abdeckband 3.2 nicht nur auf seiner Unterseite sondern auch auf seiner Oberseite Trenneigenschaften aufweist, zum Beispiel durch Wachsung oder Silikonisierung. Die Oberseite übernimmt dann die Funktion von 3.3 mit.

**Figur 2** zeigt das gleiche Klebeband K wie Figur 1, nur ist hier bereits die untere Abdeckung 3.3 entfernt worden und das Klebeband K mittels der Klebeschicht 5.3 auf die zweitoberste Papierlage P2 oder Wicklung der neuen Papierrolle aufgeklebt worden.

**Figur 3** zeigt das Gleiche wie Figur 2, wobei jedoch nun bereits das Abdeckband 3.1 von der Klebefläche 2.1 abgezogen ist.

**Figur 4** zeigt das Gleiche wie Figur 3, wobei jedoch nun bereits die oberste Papierlage P1 (= oberste oder letzte Wicklung) der neuen Papierrolle auf den durch das vorherige Abziehen des Abdeckbandes 3.1 freigelegten Teilbereich der Klebefläche 2.1 aufgeklebt ist, wonach die so vorbereitete neue Papierrolle verschlossen und dadurch so fliehkraftbeständig und windbeständig ist, dass sie zur möglichst weitgehenden Synchronisierung mit der alten (hier noch nicht gezeigten) Papierbahn auf Drehzahl gebracht werden könnte, was aber noch nicht direkt anschließend erfolgt.

**Figur 5** zeigt das Gleiche wie Figur 4, jedoch nach Entfernung des Abdeckbandes 3.2 von der Klebeschicht 2.2, wonach nun die Papierrolle mit ihrer klebebereiten Klebeschicht 2.2 tatsächlich beschleunigt wird.

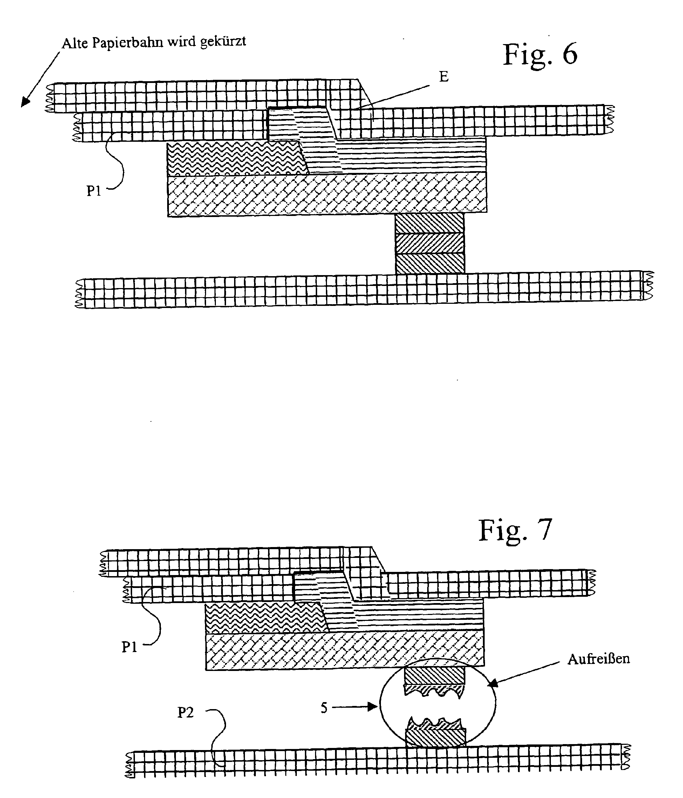

**Figur 6** zeigt den Moment, wo die gemäß Fig. 5 vorbereitete und so weit auf Drehzahl n gebrachte neue Papierrolle, dass die Bahngeschwindigkeit deren äußerster Wicklung P1, also n x π x D, weitgehend mit der Bahngeschwindigkeit der alten Papierbahn übereinstimmt, an das Ende E der alten Papierbahn herangeführt und angedrückt wird, wonach es zur Verklebung beider Papierbahnen kommt.

Schließlich zeigt **Figur 7** das - von einer Bahngeschwindigkeit von etwa 120 km/h ausgehend - etwa eine halbe bis eine Millisekunde später erfolgende Aufreißen des Verschlusses 5 der neuen Papierrolle mit einher gehender Ablösung der obersten Lage P1 der neuen Papierrolle von deren zweitoberster Lage P2. Danach sind auch deren folgende Wickellagen abziehbar.

Die Figuren 8 bis 14 beziehen sich auf das zweite, ganz besonders bevorzugte Ausführungsbeispiel und zeigen es in einer völlig analogen Abfolge. Wie schon in den vorangehenden Figuren 2 bis 7, so ist auch in den Figuren 9 bis 14 die im Vergleich zur Klebebandbreite (bevorzugt 7 cm) geringfügige Wölbung der Papierwicklungen (Rollendurchmesser etwa 2 Meter) vernachlässigt.

**Figur 8** zeigt ein erfindungsgemäßes Splice-Klebeband K, dessen auf seiner Oberseite angeordnete Klebefläche 2.1 sich über die gesamte Klebebandbreite erstreckt. Die Position "b" ist also so weit nach rechts gerückt, dass sie genau unterhalb der Position "d" zu liegen kommt. Die Position "a" liegt genauso wie in Figur 1 zumindest in der Nähe der ersten Begrenzungskante 4.1, vorzugsweise - wie hier gezeigt - genau darauf. Analog liegt "d" bei oder auf der zweiten Begrenzungskante 4.2.

Auch bei diesem Ausführungsbeispiel erstreckt sich die zweite Klebeschicht 2.2 des Klebebandes K auf der gleichen Seite des Trägers 1 wie die erste Klebeschicht 2.1.
Unter Beibehalt der Nomenklatur des ersten Beispieles erstreckt sich die erste Klebeschicht 2.1 von Position "a" bis Position "b" und die zweite Klebeschicht 2.2 von Position "c" bis Position "d". Dabei liegt die Besonderheit der Erfindung darin, dass die Position c näher an der ersten Begrenzungskante 4.1 liegt als die Position b. Mit anderen Worten: In der in den Figuren gewählten Seitenzuordnung liegt c weiter links als b.

Durch die Besonderheit, dass c links von b liegt, überlappen sich die Bereiche a-b und c-d wobei sich die beiden Klebeschichten 2.1 und 2.2 zwischen c und b überlappen; in diesem Beispiel ist also die Überlappungsbreite gleich der Breite der zweiten Klebeschicht 2.2.

Wenn - wie bevorzugt - beide Klebeschichten aus verschiedenen Klebmassen bestehen, dann sollte die erste, hier links beziehungsweise weiter unten dargestellte Klebeschicht 2.1 eine höhere Scherbeständigkeit aufweisen als die zweite, rechts und überlappend liegende zweite Klebeschicht 2.2, während letztere (2.2) den höheren Tack haben sollte.

In an sich bekannter Weise sollen beide Klebeschichten 2.1, 2.2 durch je ein Abdeckband 3.1 bzw. 3.2 abgedeckt sein, wobei das Abdeckband 3.1 nach rechts natürlich nur so weit zu reichen braucht, wie die weiter nach rechts reichende Klebeschicht 2.1 nicht ohnehin schon durch die Klebeschicht 2.2 abgedeckt ist. Um das erfindungsgemäße Klebeband K besonders einfach herstellen zu können, ist hier (abweichend von Figur 1) die linke Begrenzungskante des Liners (= Abdeckbandes) 3.1 genau auf der linken Begrenzungskante 4.1 angeordnet und die rechte Begrenzungskante des Liners 3.2 genau auf der rechten Begrenzungskante 4.2.

Auf der den beiden Klebeschichten gegenüber liegenden Seite des Trägers 1, die in dieser Anmeldung auch als Unterseite bezeichnet wird, befindet sich zweckmäßigerweise ein lösbarer Verschluss 5, wie bereits für Figur 1 näher beschrieben. Er hat die Aufgabe, die - erst in Figur 9 in Erscheinung tretende - neue Papierrolle P gegen ein vorzeitiges Abwickeln in der Beschleunigungsphase zu sichern. Die Erfindung erlaubt jede beliebige Ausbildung von lösbaren Verschlüssen; bevorzugt ist einer gemäß der DE 196 28 317.5 wie hier auch dargestellt: Dieser Verschluss 5 weist zwischen seinen beiden Klebeschichten 5.1 und 5.3 eine Lage 5.2 aus Spaltpapier auf, welches sich im Moment der Verschlussöffnung etwa entlang seiner Mittelebene spaltet.
**Figur 9** zeigt das gleiche Klebeband wie Figur 8, nun aber bereits mittels der Klebeschicht 5.3 aufgeklebt auf die zweitoberste Papierlage P2 oder Wicklung der neuen Papierrolle.

**Figur 10** zeigt das Gleiche wie Figur 9, wobei jedoch nun bereits das Abdeckband 3.1 vom freilegbaren Teil der Klebefläche 2.1 abgezogen ist.

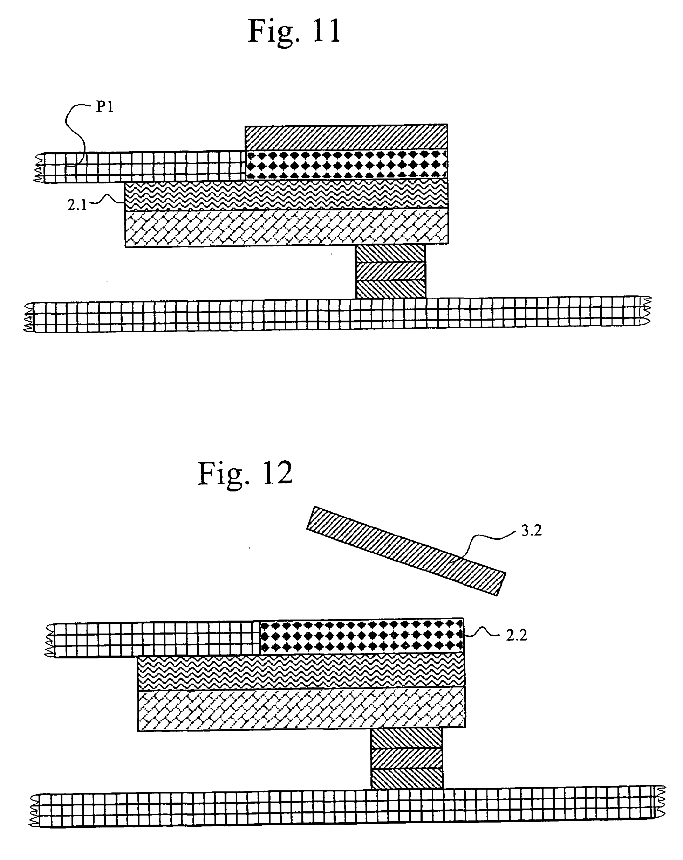

**Figur 11** zeigt das Gleiche wie Figur 10, wobei jedoch nun bereits die oberste Papierlage P1 (= oberste oder letzte Wicklung) der neuen Papierrolle auf den durch das vorherige Abziehen des Abdeckbandes 3.1 freigelegten Teilbereich der Klebefläche 2.1 aufgeklebt ist, wonach die so vorbereitete neue Papierrolle verschlossen und dadurch so fliehkraftbeständig und windbeständig ist.

**Figur 12** zeigt das Gleiche wie Figur 11, jedoch nach Entfernung des Abdeckbandes 3.2 von der Klebeschicht 2.2, wonach nun die Papierrolle mit ihrer klebebereiten Klebeschicht 2.2 tatsächlich beschleunigt wird.

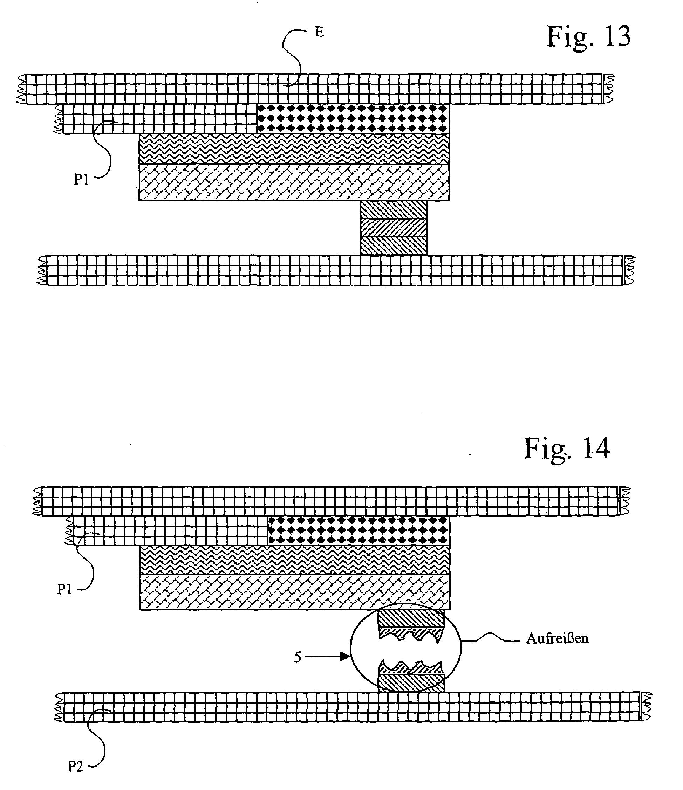

In **Figur 13** ist die gemäß Fig. 12 vorbereitete neue Papierrolle bereits auf eine solche Drehzahl n gebracht, dass deren Bahngeschwindigkeit am Außenumfang, also n x π x D, weitgehend mit der Bahngeschwindigkeit der alten Papierbahn übereinstimmt. Diese Figur zeigt den Moment, in dem das Ende E der alten Papierbahn herangeführt und angedrückt wird, wonach es zur Verklebung (dem eigentlichen Spleiß) mit der oberen Wicklung P1 der neuen Papierbahn kommt.

Und schließlich zeigt **Figur 14** das - von einer Bahngeschwindigkeit von etwa 120 km/h ausgehend - etwa eine halbe bis eine Millisekunde später erfolgende Aufreißen des Verschlusses 5 zwischen den beiden peripheren P1 und P2 der neuen Papierrolle. Nach dieser Verschlussöffnung sind auch die folgenden Wickellagen abziehbar.

Zusammenfassend lehrt die Erfindung, zur besseren Tolerierung der unvermeidlichen kleinen Synchronisationsmängel in der Durchführung einer fliegenden Spleißung zu Beginn des Kontaktes der vorbereiteten neuen Bahn mit der alten Bahn eine größere Pressung aufzubauen zwischen den beiden. Eine solche Pressungskonzentration auf den Klebstellenbeginn wird durch das Übereinanderlegen zweier Klebeschichten in zumindest einem kleinen Überlappungsbereich erreicht.

Nach einer vorteilhaften Weiterbildung der Erfindung werden beide Klebeschichten aus verschiedenen Klebemassen aufgebaut, wobei die erste Klebeschicht, die dazu vorgesehen ist, am Anfang (A) der neuen Rolle anzuhaften, auf eine besonders hohe Scherbeständigkeit hin entwickelt ist auch wenn dies in Konkurrenz zur erzielbaren Klebrigkeit steht, während die zweite Klebeschicht, die dazu vorgesehen ist, am Ende der zur Neige gehenden alten Materialbahn anzuhaften, auf eine höhere Klebrigkeit hin entwickelt ist.

Ein erfindungsgemäßes Klebeband lässt sich besonders leicht herstellen, wenn die erste Klebeschicht über die volle Breite des Klebebandes aufgebracht ist, während die zweite nur einen - in der Laufrichtung der zu fügenden Materialbahnrichtung gesehen voreilenden - Bereich einnimmt; dann ist der Überlappungsbereich beider Schichten groß und mit dem Erstreckungsbereich der zweiten Schicht identisch.

Die Erfindung dient insbesondere einer weiteren Senkung der Quote von solchen Reißern die mit einem Spleiß in Verbindung gebracht werden könnten.

Die folgende Bezugszeichenliste ist Bestandteil der Beschreibung.

### Bezugszeichenliste:

- a: als "erste Position" bezeichnete Stelle zumindest in der Nähe (schließt auch "exakt bei") der ersten Begrenzungskante 4.1 des Trägers 1
- b: als "zweite Position" bezeichnete Stelle, die näher an der anderen Begrenzungskante 4.2 des Trägers 1 liegt als Position a dies tut; gleichwohl kann b näher an der Begrenzungskante 4.1 liegen als an der Begrenzungskante 4.2; b kann auch auf der Begrenzungskante 4.2 liegen (siehe zweites Ausführungsbeispiel)
- c: als dritte Position bezeichnete Stelle, die sich zwischen den beiden Begrenzungskanten 4.1 und 4.2 des Trägers 1 des Klebebandes K befindet und gemäß dem Stande der Technik auf b oder weiter zu 4.2 hin, gemäß der Erfindung aber näher an 4.1 als b, was eine Überlappung zweier Klebschichten impliziert
- d: als vierte Position bezeichnete Stelle, die sich in der Nähe der anderen Begrenzungskante (4.2) des Trägers (1) befindet
- A: Anfang von P
- E: Ende einer zur Neige gehenden alten Papierrolle
- K: Klebeband
- P: Lagen der neuen Papierrolle, und zwar
P1 oberste (oder letzte) Lage der neuen Papierrolle P
P2 zweitoberste (oder vorletzte) Lage der neuen Papierrolle P
- I: erste von zwei aneinander zu fügenden Materialbahnen (von neuer Rolle)
- II: zweite von zwei aneinander zu fügenden Materialbahnen (von alter Rolle)
- 1: Träger des Klebebandes
- 2: Klebeschichten, und zwar
2.1 erste Klebeschicht auf Oberseite des Trägers 1, zur abwickelsicheren Fixierung des Anfanges A der neuen Rolle P
2.2 zweite Klebeschicht auf Oberseite des Trägers 1
- 3: Abdeckbänder, und zwar
3.1 Abdeckband auf Klebeschicht 2.1
3.2 Abdeckband auf Klebeschicht 2.2
3.3 Abdeckband unter der Klebeschicht 5.3
- 4: Begrenzungskanten des Trägers 1, nämlich
4.1 erste Begrenzungskante
4.2 zweite Begrenzungskante
- 5: lösbarer Verschluss der neuen Papierrolle P
5.1 Klebeschicht des lösbaren Verschlusses 5 zur Anbindung an den Träger 1
5.2 Spaltpapier zur Auflösung des Verschlusses 5 und damit der Freigabe der neuen Papierrolle zum Abwickeln
5.3 Klebeschicht des lösbaren Verschlusses 5 zur Anbindung an die zweitoberste Lage P2 der neuen Papierrolle P

## Patentansprüche

1. Klebeband (K) zum Aneinanderfügen zweier Materialbahnen (I, II), insbesondere zum Aneinanderfügen des Anfanges (A) einer neuen Papierrolle (P) an das Ende (E) einer zur Neige gehenden alten Papierrolle,
a) wobei das Klebeband (K) dazu geeignet ist, zumindest im Wesentlichen quer über die aneinander zu fügenden Materialbahnen (I, II) aufgeklebt zu werden,
b) wobei das Klebeband (K) einen - vorzugsweise aus Papier bestehenden - Träger (1) aufweist,
c) auf dessen (1) Oberseite eine erste Klebeschicht (2.1) und eine zweite Klebeschicht (2.2) angeordnet ist,
d) wobei die erste Klebeschicht (2.1) dazu vorgesehen ist, am Anfang (= das vordere Ende) der neuen Materialbahn (I) anzuhaften,
e) während die zweite Klebeschicht (2.2) dazu vorgesehen ist, am Ende (E) der zur Neige gehenden alten Materialbahn (II) anzuhaften,
f) wobei sich die erste Klebeschicht (2.1) - in der Dimension der Breite des Klebebandes - von einer ersten Position (a) in der Nähe einer ersten Begrenzungskante (4.1) des Trägers (1) bis zu einer zweiten Position (b) erstreckt, welche sich zwischen den beiden Begrenzungskanten (4.1, 4.2) des Klebebandes (K) oder an der zweiten Begrenzungskante (4.2) befindet,
g) und sich die zweite Klebeschicht (2.2) - in der Dimension der Breite des Klebebandes (K) - von einer dritten Position (c), welche sich zwischen den beiden Begrenzungskanten (4.1, 4.2) des Trägers (1) des Klebebandes (K) befindet bis zu einer vierten Position (d) in der Nähe der anderen Begrenzungskante (4.2) des Trägers (1) erstreckt,
**dadurch gekennzeichnet, dass**
h) die zweite Position (b) weiter von der ersten Begrenzungskante (4.1) des Trägers (1) entfernt liegt als die dritte Position (c),
i) sodass die zweite Klebeschicht (2.2) die erste Klebeschicht (2.1) überlappt.

2. Klebeband (K) nach Anspruch 1, **dadurch gekennzeichnet, dass** die beiden Klebeschichten (2.1, 2.2) aus verschiedenen Klebmassen bestehen.

3. Klebeband (K) nach Anspruch 2, **dadurch gekennzeichnet, dass** die Klebmasse der ersten Klebeschicht (2.1) eine höhere Scherbeständigkeit aufweist als die Klebmasse der zweiten Klebeschicht (2.2).

4. Klebeband (K) nach Anspruch 3, **dadurch gekennzeichnet, dass** die Scherbeständigkeit der ersten Klebmasse um mindestens 40% über der Scherbeständigkeit der zweiten Klebmasse liegt.

5. Klebeband (K) nach Anspruch 4, **dadurch gekennzeichnet, dass** die Scherbeständigkeit der ersten Klebmasse mindestens das 3-fache, besonders bevorzugt etwa das 15-fache der Scherbeständigkeit der zweiten Klebmasse beträgt.

6. Klebeband (K) nach Anspruch 2, **dadurch gekennzeichnet, dass** die zweite Klebmasse eine höhere Klebrigkeit aufweist als die erste Klebmasse.

7. Klebeband (K) nach Anspruch 3, **dadurch gekennzeichnet, dass** die zweite Klebmasse eine höhere Klebrigkeit aufweist als die erste Klebmasse.

8. Klebeband (K) nach Anspruch 6 oder 7, **dadurch gekennzeichnet, dass** die Klebrigkeit (= Tack) der zweiten Klebmasse um mindestens den Faktor 3, vorzugsweise 8 bis 12 größer ist als die Klebrigkeit der ersten Klebmasse, wobei beide Klebrigkeiten gemäß PSTC-6 zu messen sind bei einer Temperatur von 25°C.

9. Klebeband (K) nach einem der vorangehenden Ansprüche, **dadurch gekennzeichnet, dass** die erste Klebezone nur höchstens 30% der Breite des Klebebandes (K) einnimmt.

10. Klebeband (K) nach einem der vorangehenden Ansprüche, **dadurch gekennzeichnet, dass** im Überlappungsbereich die scherbeständigere Klebeschicht (2.1) unterhalb der weniger scherbeständigen Klebeschicht (2.2) liegt.

11. Klebeband (K) nach einem der vorangehenden Ansprüche, **dadurch gekennzeichnet, dass** im Überlappungsbereich die klebrigere Klebeschicht (2.2) über der weniger klebrigen Klebeschicht (2.1) liegt.

12. Klebeband (K) nach einem der vorangehenden Ansprüche, **dadurch gekennzeichnet, dass** sich die erste Klebeschicht (2.1) über die gesamte Breite des Klebebandes (K) erstreckt.

13. Klebeband (K) nach einem der vorangehenden Ansprüche, **dadurch gekennzeichnet, dass** es eine Breite unterhalb von 35 mm aufweist.

## Claims

1. Adhesive tape (K) for joining two material webs (I, II), in particular for joining the start (A) of a new paper roll (P) to the end (E) of an old, expiring paper roll,
a) said tape (K) being suitable to be adhered at least substantially transversely over the material webs (I, II) to be joined,
b) said tape (K) having a backing (1) which is preferably composed of paper,
c) on whose (1) top face a first adhesive layer (2.1) and a second adhesive layer (2.2) are disposed,
d) the first adhesive layer (2.1) being intended to attach to the start (= the leading end) of the new material web (I),
e) while the second adhesive layer (2.2) is intended to attach to the end (E) of the old, expiring material web (II),
f) the first adhesive layer (2.1) extending, in the dimension of the width of the adhesive tape, from a first position (a) in the vicinity of a first boundary edge (4.1) of the backing (1) to a second position (b) located between the two boundary edges (4.1, 4.2) of the adhesive tape (K) or at the second boundary edge (4.2),
g) and the second adhesive layer (2.2) extending, in the dimension of the width of the adhesive tape (K), from a third position (c) located between the two boundary edges (4.1, 4.2) of the backing (1) of the adhesive tape (K) to a fourth position (d) in the vicinity of the other boundary edge (4.2) of the backing (1),
**characterized in that**
h) the second position (b) is located further from the first boundary edge (4.1) of the backing (1) than is the third position (c),
i) so that the second adhesive layer (2.2) overlaps the first adhesive layer (2.1).

2. Tape (K) according to Claim 1, **characterized in that** the two adhesive layers (2.1, 2.2) are composed of different adhesives.

3. Tape (K) according to Claim 2, **characterized in that** the adhesive of the first adhesive layer (2.1) has a higher shear resistance than the adhesive of the second adhesive layer (2.2).

4. Tape (K) according to Claim 3, **characterized in that** the shear resistance of the first adhesive is at least 40% above the shear resistance of the second adhesive.

5. Tape (K) according to Claim 4, **characterized in that** the shear resistance of the first adhesive is at least 3 times, with particular preference approximately 15 times, the shear resistance of the second adhesive.

6. Tape (K) according to Claim 2, **characterized in that** the tack of the second adhesive is higher than that of the first adhesive.

7. Tape (K) according to Claim 3, **characterized in that** the tack of the second adhesive is higher than that of the first adhesive.

8. Tape (K) according to Claim 6 or 7, **characterized in that** the tack of the second adhesive is greater by a factor of at least 3, preferably from 8 to 12, than the tack of the first adhesive, both tacks being measured in accordance with PSTC-6 at a temperature of 25°C.

9. Tape (K) according to any of the preceding claims, **characterized in that** the first bonding zone occupies only 30% at maximum of the width of the tape (K).

10. Tape (K) according to any of the preceding claims, **characterized in that** in the region of overlap the more shear-resistant adhesive layer (2.1) is below the less shear-resistant adhesive layer (2.2).

11. Tape (K) according to any of the preceding claims, **characterized in that** in the region of overlap the more tacky adhesive layer (2.2) is above the less tacky adhesive layer (2.1).

12. Tape (K) according to any of the preceding claims, **characterized in that** the first adhesive layer (2.1) extends over the entire width of the tape (K).

13. Tape (K) according to any of the preceding claims, **characterized in that** it has a width of less than 35 mm.

## Revendications

1. Ruban adhésif (K) destiné à rejoindre deux nappes de matériau (I, II) et en particulier pour rejoindre le début (A) d'un nouveau rouleau de papier (P) à la fin (E) d'un ancien rouleau de papier près d'être épuisé,
a) le ruban adhésif (K) convenant pour être collé au moins essentiellement dans le sens transversal sur les nappes de matériau (I, II) qui doivent être jointes l'une à l'autre,
b) le ruban adhésif (K) présentant un support (1) de préférence constitué de papier,
c) une première couche adhésive (2.1) et une deuxième couche adhésive (2.2) étant disposées sur le côté supérieur du support (1),
d) la première couche adhésive (2.1) étant prévue pour adhérer au début (= l'extrémité avant) de la nouvelle nappe de matériau (I),
e) tandis que la deuxième couche adhésive (2.2) est prévue pour adhérer à la fin (E) de l'ancienne nappe de matériau (II) près d'être épuisé,
f) la première couche adhésive (2.1), dans le sens de la largeur du ruban adhésif, s'étendant depuis une première position (a) située à proximité d'un premier bord frontière (4.1) du support (1) jusqu'à une deuxième position (b) qui est située entre les deux bords frontières (4.1, 4.2) du ruban adhésif (K) ou sur le deuxième bord frontière (4.2),
g) la deuxième couche adhésive (2.2), dans le sens de la largeur du ruban adhésif (K), s'étendant depuis une troisième position (c) qui est située entre les deux bords frontières (4.1, 4.2) du support (1) du ruban adhésif (K) jusqu'à une quatrième position (d) située à proximité de l'autre bord frontière (4.2) du support (1),
**caractérisé en ce que**
h) la deuxième position (b) est plus éloignée du premier bord frontière (4.1) du support (1) que la troisième position (c),
i) de telle sorte que la deuxième couche adhésive (2.2) recouvre la première couche adhésive (2.1).

2. Ruban adhésif (K) selon la revendication 1, **caractérisé en ce que** les deux couches adhésives (2.1, 2.2) sont constituées de pâtes adhésives différentes.

3. Ruban adhésif (K) selon la revendication 2, **caractérisé en ce que** la pâte adhésive de la première couche adhésive (2.1) présente une plus grande résistance au cisaillement que la pâte adhésive de la deuxième couche adhésive (2.2).

4. Ruban adhésif (K) selon la revendication 3, **caractérisé en ce que** la résistance au cisaillement de la première pâte adhésive est d'au moins 40% plus élevée que la résistance au cisaillement de la deuxième pâte adhésive.

5. Ruban adhésif (K) selon la revendication 4, **caractérisé en ce que** la résistance au cisaillement de la première pâte adhésive représente au moins 3 fois et de façon particulièrement préférée environ 15 fois la résistance au cisaillement de la deuxième pâte adhésive.

6. Ruban adhésif (K) selon la revendication 2, **caractérisé en ce que** la deuxième pâte adhésive présente une plus grande adhérence au contact que la première pâte adhésive.

7. Ruban adhésif (K) selon la revendication 3, **caractérisé en ce que** la deuxième pâte adhésive présente une plus grande adhérence au contact que la première pâte adhésive.

8. Ruban adhésif (K) selon la revendication 6 ou 7, **caractérisé en ce que** l'adhérence au contact (= "tack") de la deuxième pâte adhésive est d'au moins 3 fois et de préférence de 8 à 12 fois plus grande que l'adhérence au contact de la première pâte adhésive, les deux résistances au contact étant mesurées selon PSTC-6 à une température de 25°C.

9. Ruban adhésif (K) selon l'une quelconque des revendications précédentes, **caractérisé en ce que** la première zone adhésive n'occupe qu'au plus 30% de la largeur du ruban adhésif (K).

10. Ruban adhésif (K) selon l'une quelconque des revendications précédentes, **caractérisé en ce que** dans la zone de leur superposition, la couche adhésive (2.1) plus résistante au cisaillement est située en dessous de la couche adhésive (2.2) moins résistante au cisaillement.

11. Ruban adhésif (K) selon l'une quelconque des revendications précédentes, **caractérisé en ce que** dans la zone de leur superposition, la couche adhésive (2.2) plus collante est située au-dessus de la couche adhésive (2.1) moins collante.

12. Ruban adhésif (K) selon l'une quelconque des revendications précédentes, **caractérisé en ce que** la première couche adhésive (2.1) s'étend sur toute la largeur du ruban adhésif (K).

13. Ruban adhésif (K) selon l'une quelconque des revendications précédentes, **caractérisé en ce que** sa largeur est inférieure à 35 mm.
